# FASCICULE DE BREVET EUROPEEN

(11) **EP 2 597 039 B1**
(45) Date de publication et mention de la délivrance du brevet: **05.11.2014**
(21) Numéro de dépôt: 12193413.7
(22) Date de dépôt: 20.11.2012
(51) Int. Cl.: B64D 29/02, B64D 29/06

(54) **Carénage aérodynamique arrière de mât de moteur d'aéronef**
Hinterseitige aerodynamische Verkleidung eines Flugzeugtriebwerkspylons
Aerodynamic aft fairing of aircraft engine pylon

(30) Priorité: 22.11.2011 FR 1160650
(43) Date de publication de la demande: 29.05.2013
(73) Titulaire: AIRBUS OPERATIONS (S.A.S), 31060 Toulouse (FR)
(72) Inventeur: Machado, Stéphane, 82600 Verdun sur Garonne (FR); Raison, Fabien, 31830 Plaisance du Touch (FR); Romani, Stéphane, 31200 Toulouse (FR)
(74) Mandataire: Gicquel, Olivier Yves Gérard

(56) Documents cités:
- FR-A1- 2 913 665
- FR-A1- 2 921 342

## Description

### DOMAINE TECHNIQUE

L'invention se rapporte à un carénage aérodynamique arrière d'un mât d'accrochage d'un moteur d'aéronef. Un tel mât a pour fonction de lier de manière rigide le moteur à la voilure de l'aéronef.

L'invention s'applique à tout type d'aéronef équipé de tout type de moteurs, tels que des turboréacteurs ou des turbopropulseurs.

Un tel mât permet de suspendre le moteur au-dessous de la voilure ou de positionner le moteur au-dessus de la voilure.

Les qualificatifs de type «supérieur» et «inférieur» ci-dessous se rapportent à une configuration de suspension des moteurs sous la voilure en utilisation standard. En configuration de moteurs au-dessus de la voilure, les qualificatifs de type cités seraient bien entendu inversés. Par ailleurs, les termes de localisation «avant», «arrière» et leurs équivalents s'entendent en fonction d'une utilisation standard de l'aéronef dans son déplacement habituel en vol.

### ÉTAT DE LA TECHNIQUE

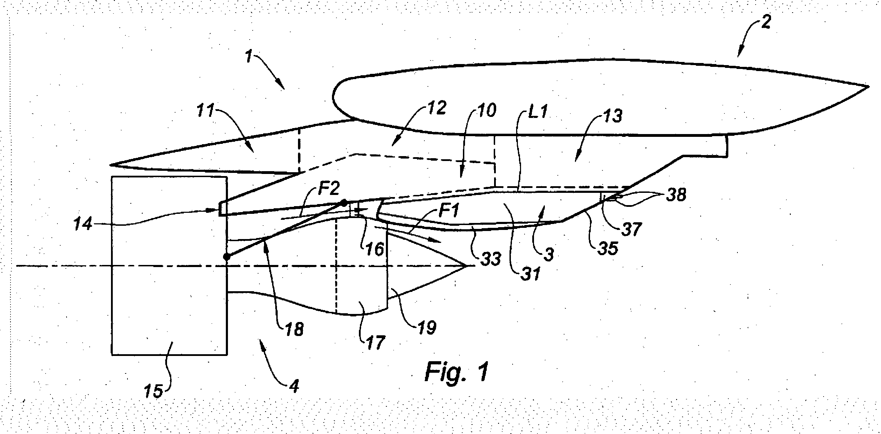

Comme illustré par la vue latérale de la figure 1, les mâts 1 d'aéronefs sont constitués d'une structure centrale 10 entourée de structures aérodynamiques secondaires et de carénages, à savoir : des structures aérodynamiques supérieures avant 11 et arrière 13, de part et d'autre d'un carénage de raccordement 12 à la voilure 2. Un carénage aérodynamique arrière 3, ou APF (initiales de «Aft Pylon Fairing» en terminologie anglaise), est disposé en général à la fois sous la structure rigide centrale 10 et sous la structure aérodynamique arrière 13.

Le mât 1 permet également de transmettre l'approvisionnement en carburant, les câblages électriques, les tuyaux hydrauliques et pneumatiques entre les moteurs 4 et l'aéronef. Par ailleurs, le mât est équipé en général de deux systèmes d'accrochage du moteur, les attaches avant 14 et arrière 16, entre la structure rigide centrale 10 et deux carters du moteur, respectivement le carter de soufflante 15 et celui des turbines de propulsion 17. De plus, deux bielles latérales de reprise d'efforts de poussée 18 relient l'arrière du carter de soufflante 15 au dispositif d'attache arrière 16 du moteur 4.

Les structures du mât permettent la ségrégation des différents systèmes et de supporter les carénages. Ellessont habituellement constituées de caissons formés par l'assemblage de longerons supérieurs et inférieurs raccordés par des panneaux latéraux et rigidifiés par une série de nervures transversales. Ces caissons sont conçus pour transmettre à la voilure 2 les efforts statiques et dynamiques générés par les moteurs: poids, poussée, efforts dynamiques, vibrations. Les carénages quant à eux sont en général formés de panneaux rapportés sur les structures.

En particulier, le carénage aérodynamique arrière 3 (ou APF) a une fonction importante dans la traînée aérodynamique et la stabilité de l'ensemble du mât. Il se présente classiquement sous la forme d'un caisson ouvert en partie supérieure car il se raccorde aux autres structures du mât précisément par cette ouverture.

Ce caisson comporte des longerons supérieurs L1, deux panneaux latéraux 31 fixés sur des nervures transversales, un plancher 33 constitué de longerons solidarisé à un fond en matériau apte à réaliser une protection thermique, ainsi qu'un bord de fuite 35 terminé par un drain 37. Le bord de fuite fait office de fermeture aérodynamique et le drain est pourvu de tuyaux 38 de récupération et d'évacuation de liquides parasitespar mise à l'air de l'ensemble.

En assemblage, le bord de fuite 35 est monté sur le plancher 33 et les panneaux 31, et le drain est soudé sur le bord de fuite 35,les panneaux 31 et les longerons supérieurs L1.

Le plancher 33 du carénage aérodynamique arrière 3 est exposé au flux de gaz primaire F1 s'échappant de la tuyère 19 et particulièrement élevés en température (pouvant atteindre 550°C par exemple). Au contraire, les panneaux latéraux 31 de ce carénage sont en contact avec le flux d'air secondaire F2 circulant en périphérie du flux primaire F1. Ce flux secondaire F2, qui provient de l'extérieur et a juste été redressé après avoir traversé la soufflante, reste à des températures basses, voire négatives (de -10 à -40°C par exemple).

Or, les structures de plus en plus lourdes et volumineuses des moteurs 4 provoquent la dégradation du carénage arrière par l'augmentation des vibrations. La question de la rigidification du carénage arrière s'est donc posée afin de lutter contre ces vibrations et contre les déformations qui résultent des gradients de températures subies par les panneaux et le plancher du carénage arrière 3.

Pour lutter contre les déformations et les vibrations, il est connu de sur-dimensionner les nervures transversales internes ou d'utiliser des matériaux de coût élevé présentant des propriétés de résistance thermomécanique supérieures. Dans le document de brevet FR 2 913 665, il est prévu de former le plancher du carénage arrière en tronçons assemblés aux nervures par des moyens déportant ces tronçons. Cette structure permet certes d'absorber les dilatations thermiques mais elle ne favorise pas la structuration et ne permet pas d'amortir les vibrations.

De plus, le document FR 2921342 décrit les caractéristiques du préambule de la revendication 1.

### EXPOSÉDE L'INVENTION

L'invention vise à s'affranchir de ces inconvénients en proposant une liaison structurale permettant de faire passer les efforts et de tenir l'ensemble du carénage sans passer par les panneaux.

Plus précisément, la présente invention a pour objet un carénage aérodynamique arrière d'un mât d'accrochage de moteur d'aéronef comportant des longerons supérieurs, des nervures transversales, des longerons inférieurs, ainsi qu'un bord de fuite. Les longerons supérieurs et inférieurs se joignent entre eux selon une configuration en «V» du côté du bord de fuite. Dans ce carénage, une ossature structurale est réalisée en bord de fuite selon un profilé ouvert vers l'extérieur du carénage. L'ossature vient, en une première portion d'extrémité, s'encastrer en continuité longitudinale des longerons inférieurs entre une portion d'extrémité des longerons inférieurs et des extrémités de nervures transversales. Elle s'étend entre les longerons inférieurs et les longerons supérieurs sur une portion centrale rectiligne inclinée par rapport à ladite première portion d'extrémité, cette portion centrale étant apte à accueillir le bord de fuite. Elle vient en une seconde portion d'extrémité en continuité contre une portion des longerons supérieurs, parallèlement à ladite première extrémité.

Selon certains modes de réalisation préférés:
- la portion de liaison des longerons supérieurs à l'ossature laisse libre l'extrémité des bords d'extrémité desdits longerons supérieurs de manière à permettre l'intégration consolidée du bord de fuite en liaison avec l'extrémité des longerons supérieurs;
- la première portion d'extrémité de l'ossature est fixée à travers une fixation de l'ensemble nervure(s)-ossature-longerons;
- l'ossature est réalisée par soudage de deux demi-coquilles pour former un profilé en «U»;
- l'encastrement de l'ossature sur les longerons inférieurs est réalisé par soyage de l'ossature sur ces longerons;
- le bord de fuite est constitué d'une feuille de tôle pliée longitudinalement le long d'une arête pour former deux pans) intégrés dans l'ossature pour être fixés tout le long des flancs du profilé de l'ossature;
- l'ossature est formée de deux demi-coquilles identiques soudées longitudinalement entre elles le long d'une ligne médiane;
- un drain est intégré de manière amovible par une découpe du bord de fuite du côté des longerons supérieurs;
- des panneaux latéraux ainsi qu'un revêtement de protection thermique sont solidarisés respectivement aux nervures et aux longerons inférieurs.

### PRÉSENTATION DES FIGURES

D'autres données, caractéristiques et avantages de la présente invention apparaîtront à la lecture de la description non limitée qui suit, en référence aux figures annexées qui représentent, respectivement:
- la figure 1 , une vue latérale d'un mât de moteur d'aéronef (déjà commentée) ;
- la figure 2, une vue globale d'un exemple de carénage arrière selon l'invention;
- la figure 3, une vue de la partie arrière du carénage selon la figure 2 avec les liaisons entre l'ossature et les longerons inférieurs et supérieurs;
- la figure 4, une vue agrandie de la liaison ossature/longerons supérieurs dudit carénage ;
- la figure 5, une vue agrandie de la liaison ossature/longerons inférieursdudit carénage;
- la figure 6, une vue de la partie arrière du carénage arrière après mise en place du revêtement de protection thermique;
- la figure 7, une vue en coupe longitudinale dudit carénage après intégration du bord de fuite, et
- la figure 8, une vue latérale dudit carénage après fixation des panneaux latéraux.

### DESCRIPTION DÉTAILLÉE

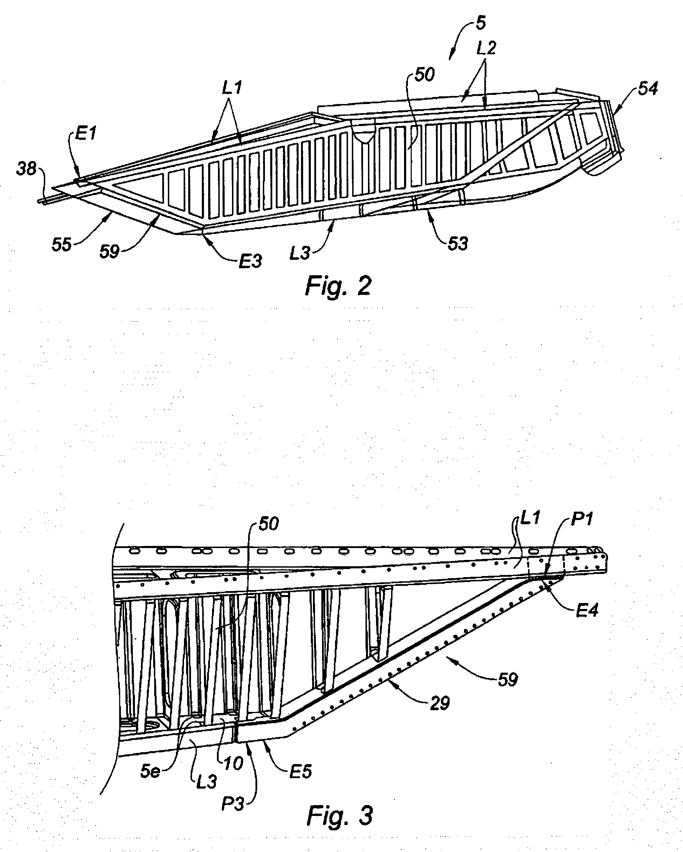

En référence à la vue globale de la figure 2,un exemple de carénage arrière 5 selon l'invention se présente sous la forme d'un caisson ouvert dans sa partie supérieure. Ce caisson comporte des longerons supérieurs L1 et L2. Les longerons supérieurs arrière L1 se joignent en «V» en leurs extrémités arrière E1, alors que les longerons supérieurs avant L2 restent parallèles.

Sur cette figure 2, les panneaux latéraux ne sont pas illustrés afin de faire apparaître les nervures transversales 50 qui sont disposées du bord d'attaque 54 au bord de fuite 55. Le plancher 53 est constitué de longerons inférieurs L3 qui se rejoignenten «V» en bord de fuite. Une ossature 59 joint les extrémités arrière E1 et E3 respectivement des longerons supérieurs L1 et inférieurs L3, d'une manière qui sera décrite ci-après en référence aux figures 3 à 5. Le bord de fuite 55 est montésur l'ossature 59..Le bord de fuite 55 fait office de fermeture aérodynamique et de drain pourvu des tuyaux 38 de récupération et d'évacuation de liquides de fuite, déjà décrits plus haut.

En référence à la figure 3, les portions d'extrémités E4 et E5 de l'ossature 59 apparaissent, respectivement, en liaison avec les longerons supérieurs arrière L1 et inférieurs L3. L'ossature 59 est également liée aux nervures transversales 50, à quatre nervures dans l'exemple non limitatif illustré. La forme générale de l'ossature 59 est dite en «Z» du fait de sa portion centrale inclinée et de ses extrémités parallèles.

L'ossature 59 est dite structurale car elle participe à la tenue générale de l'APF 5. Elle est structurée sous forme d'un profilé ouvert en «U» dans l'exemple,profilé tourné vers l'extérieur du carénage 5. L'ossature vient, en extrémité E5, s'encastrer en continuité longitudinale des longerons inférieurs L3, entre une portion d'extrémité P3 correspondante des longerons inférieurs L3 et des extrémités 5e de nervures transversales 50. Cet encastrement est consolidé par boulonnage entre les extrémités 5e et les longerons inférieurs L3 à travers un plancher 10.

L'ossature 59 s'étend entre les longerons inférieurs L3 et les longerons supérieurs arrière L1 sur une portion centrale rectiligne 29, inclinée par rapport à son extrémité E5 et aux longerons. Cette ossature 59 vient en extrémité E4 en continuité contre une portion P1 des longerons supérieurs L1, E4 étant parallèle à l'autre extrémité E5. L'aire de contact entre l'ossature 59 et les longerons supérieurs L1 résulte de l'inclinaison de la portion centrale 29.

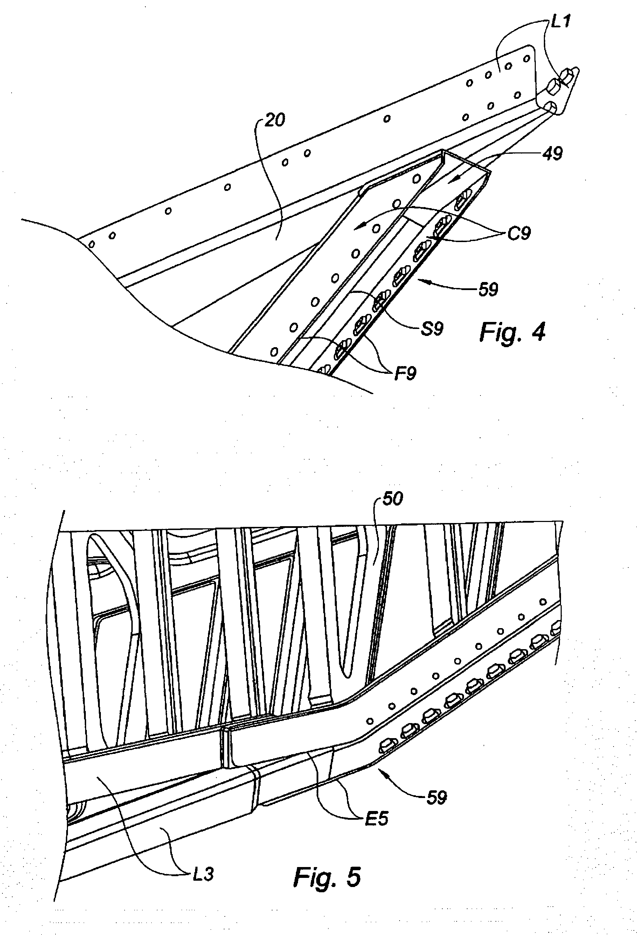

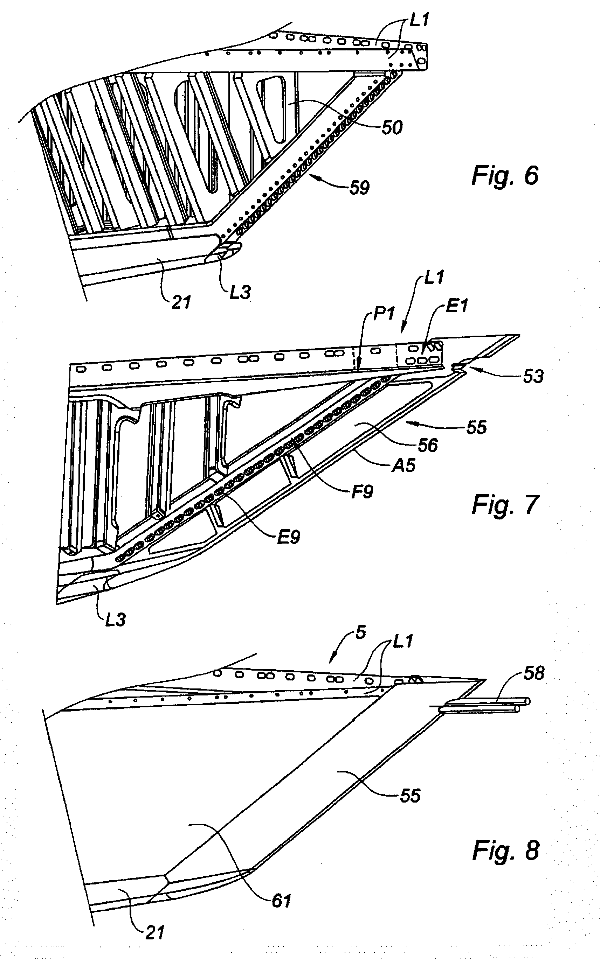

La figure 4 illustre plus précisément la liaison entre les longerons supérieurs L1 et l'ossature 59. En appui sur les longerons L1, une pièce 49 rapportée par soudage sur l'ossature 59 est vissée sur un tablier de fond 20 qui raccorde les longerons L1 en leur base inférieure. Le profilé en «U» de l'ossature 59 apparaît sur cette vue: il se compose de deux demi-coques C9 identiques, soudées entre elles le long d'une ligne médiane de soudure S9. Des écrous flottants E9 sont insérés tout le long des flancs F9 du profilé pour fixer le bord de fuite de la manière décrite ci-dessous en référence à la figure 7. D'autres écrous flottants E9 apparaissent également sur les longerons L1 pour fixer les panneaux de l'APF comme cela sera évoqué ci-après en liaison avec la figure 8.

En référence à la figure 5, il apparaît que la liaison entre l'ossature 59 et les longerons L3 est formée par soyage. Ce soyage entraîne une légère déformation de la portion d'extrémité E5 de l'ossature 59 du fait de l'écartement en « V » des longerons inférieurs L3.

Ces longerons inférieurs L3 sont recouverts par collage ou thermofusion d'un revêtement 21 de protection thermique à base d'aluminium ou de matériau composite fibres/résine. Le positionnement arrière du revêtement 21 est illustré en figure 6.

Par ailleurs, le bord de fuite 55, formé d'une feuille de titane pliée le long d'une arête A5, est fixé à chaque flanc F9 de l'ossature 59 comme le montre la vue en coupe longitudinale de la figure 7: un alignement d'écrous flottants E9 assure la liaison entre chaque pan 56 du bord de fuite 55 et chaque flanc F9 de l'ossature. La portion P1 des longerons supérieurs L1 en liaison avec l'ossature 59 laisse libre l'extrémité E1 de ces longerons de manière à permettre une intégration consolidée du bord de fuite 55 en liaison avec l'extrémité E1 des longerons supérieurs L1.

Une ouverture 53 est découpée vers l'extrémité supérieure du bord de fuite55 afin d'intégrer le drain d'évacuation des liquides. Les tuyaux 58 de récupération et d'évacuation de liquides du drain intégré au bord de fuite 55 apparaissent sur la figure 8. Sur cette figure 8, qui illustre en vue frontale la partie arrière d'un APF5 selon l'invention en fin de montage, apparaissent également les panneaux latéraux 61 montés sur les longerons et les nervures à l'aide d'écrous flottants E9 ainsi que le revêtement de protection thermique 21.

L'invention n'est pas limitée aux exemples de réalisation décrits et représentés. Ainsi, le profilé de l'ossature 59 peut être de forme variée en section, par exemple en «V» ou en «W». Par ailleurs, les matériaux utilisés pour l'APF peuvent être en aluminium ou en matériau composite.

## Revendications

1. Carénage aérodynamique arrière (5) d'un mât (1) d'accrochage de moteur (4) d'aéronef comportant des longerons supérieurs (L1), des nervures transversales (50), des longerons inférieurs (L3), ainsi qu'un bord de fuite (55), les longerons supérieurs (L1) et inférieurs (L3) se joignant entre eux selon une configuration en « V » du côté du bord de fuite (55), **caractérisé en ce qu'**une ossature structurale (59) est réalisée en bord de fuite selon un profilé ouvert vers l'extérieur du carénage (5), et ence que l'ossature (59) vient, en une première portion d'extrémité (E5), s'encastrer en continuité longitudinale des longerons inférieurs (L3) entre une portion d'extrémité (P3) des longerons inférieurs (L3) et des extrémités (5e) d'au moins une nervure transversale (50), s'étend entre les longerons inférieurs (L3) et les longerons supérieurs (L1) sur une portion centrale rectiligne (29) inclinée par rapport à ladite première portion d'extrémité (E5), cette portion centrale (29) étant apte à accueillir le bord de fuite (55), et vient en une seconde portion d'extrémité (E4) en continuité contre une portion (P1) des longerons supérieurs (L1), parallèlement à ladite première extrémité (E5).

2. Carénage selon la revendication 1, dans lequel la portion (P1) de liaison des longerons supérieurs (L1) à l'ossature (59) laisse libre l'extrémité (E1) desdits longeronssupérieurs de manière à permettre une intégration consolidée du bord de fuite en liaison avec ladite extrémité (E1) des longerons supérieurs.

3. Carénage selon l'une des revendications 1 ou 2, dans lequel la première portion d'extrémité (E5) de l'ossature (59) est fixée à travers une fixation de l'ensemble nervure(s)-ossature-longerons.

4. Carénage selon l'une des revendications précédentes, dans lequel l'ossature (59) est réalisée par soudage de deux demi-coquilles (C9) pour former un profilé en «U».

5. Carénage selon l'une des revendications précédentes, dans lequel l'encastrement de l'ossature (59) sur les longerons inférieurs (L3) est réalisé par soyage de l'ossature sur ces longerons.

6. Carénage selon l'une des revendications précédentes, dans lequel le bord de fuite (55) est constitué d'une feuille de tôle pliée longitudinalement le long d'une arête (A5) pour former deux pans (56) intégrés dans l'ossature pour être fixés tout le long des flancs (F9) du profilé de l'ossature (59).

7. Carénage selon l'une des revendications précédentes, dans lequel l'ossature (59) est formée de deux demi-coquilles (C9) identiques soudées longitudinalement entre elles le long d'une ligne médiane (S9).

8. Carénage selon l'une des revendications précédentes, dans lequel un drain est intégré de manière amovible par une découpe du bord de fuite (55) du côté des longerons supérieurs (L1).

9. Carénage selon l'une des revendications précédentes, dans lequel des panneaux latéraux (61) ainsi qu'un revêtement de protection thermique (21) sont solidarisés respectivement aux nervures (50) et aux longerons inférieurs (L3).

## Patentansprüche

1. Hinterseitige aerodynamische Verkleidung (5) eines Befestigungspylons (1) eines Flugzeugtriebwerks (4), umfassend obere Längsträger (L1), Querrippen (50), untere Längsträger (L3) sowie einen Leckagerand (55), wobei die oberen Längsträger (L1) und die unteren Längsträger (L3) "V-förmig" auf der Seite des Leckagerandes (55) aneinanderstoßen, **dadurch gekennzeichnet, dass** ein Strukturgerüst (59) am Leckagerand nach einem nach außen zur Verkleidung (5) hin offenen Profil ausgeführt ist, und dass das Gerüst (59) an einem ersten Endabschnitt (E5) in Längsausrichtung zu den unteren Längsträgern (L3) zwischen einem Endabschnitt (P3) der unteren Längsträger (L3) und Enden (5e) mindestens einer Querrippe (50) eingesetzt wird, sich zwischen den unteren Längsträgern (L3) und den oberen Längsträgern (L1) auf einem geraden zentralen, zum ersten Endabschnitt (E5) geneigten Abschnitt (29) erstreckt, wobei dieser zentrale Abschnitt (29) geeignet ist, den Leckagerand (55) aufzunehmen, und an einem zweiten Endabschnitt (E4) in Ausrichtung an einem Abschnitt (P1) der oberen Längsträger (L1) parallel zum ersten Ende (E5) zur Anlage gelangt.

2. Verkleidung nach Anspruch 1, bei der der Verbindungsabschnitt (P1) der oberen Längsträger (L1) mit dem Gerüst (59) das Ende (E1) der oberen Längsträger frei lässt, um eine feste Eingliederung des Leckagerandes in Verbindung mit dem Ende (E1) der oberen Längsträger zu ermöglichen.

3. Verkleidung nach einem der Ansprüche 1 oder 2, bei der der erste Endabschnitt (E5) des Gerüsts (59) durch eine Befestigung der Einheit Rippe(n)-Gerüst-Längsträger befestigt ist.

4. Verkleidung nach einem der vorhergehenden Ansprüche, bei der das Gerüst (59) durch Verschweißen von zwei Halbschalen (C9), um ein "U"-Profil zu bilden, hergestellt ist.

5. Verkleidung nach einem der vorhergehenden Ansprüche, bei der das Einsetzen des Gerüsts (59) auf die unteren Längsträger (L3) durch Stechen des Gerüsts auf diese Längsträger erfolgt.

6. Verkleidung nach einem der vorhergehenden Ansprüche, bei der der Leckagerand (55) von einer längs entlang einer Kante (A5) gefalzten Blechfolie gebildet ist, um zwei in das Gerüst integrierte Flächen (56) zu bilden, um entlang der gesamten Seiten (F9) des Profils des Gerüsts (59) befestigt zu werden.

7. Verkleidung nach einem der vorhergehenden Ansprüche, bei der das Gerüst (59) von zwei identischen Halbschalen (C9) gebildet ist, die längs miteinander entlang einer Mittellinie (S9) verschweißt sind.

8. Verkleidung nach einem der vorhergehenden Ansprüche, bei der ein Drain abnehmbar durch einen Ausschnitt des Leckagerandes (55) auf der Seite der oberen Längsträger (L1) integriert ist.

9. Verkleidung nach einem der vorhergehenden Ansprüche, bei der Seitenplatten (61) sowie eine Wärmeschutzabdeckung (21) mit den Rippen (50) bzw. den unteren Längsträgern (L3) verbunden sind.

## Claims

1. Aft aerodynamic fairing (5) for an aircraft engine (4) attachment pylon (1) comprising upper spars (L1), transverse ribs (50), lower spars (L3) and a trailing edge (55), the upper (L1) and the lower (L3) spars joining together in a "V" configuration on the trailing edge (55) side, **characterized in that** a structural framework (59) is formed at the trailing edge with a profile open to the outside of the fairing (5), and **in that** the framework (59) comes, in a first end portion (E5), to be fitted in the longitudinal continuity of the lower spars (L3) between an end portion (P3) of the lower spars (L3) and ends (5e) of at least one transverse rib (50), extends between the lower spars (L3) and the upper spars (L1) over a rectilinear central portion (25) inclined with respect to said first end portion (E5), this central portion (29) being able to accommodate the trailing edge (55), and comes in a second end portion (E4) in continuity against a portion (P1) of the upper spars (L1), parallel to said first end (E5).

2. Fairing according to Claim 1, in which the portion (P1) for connecting the longitudinal spars (L1) to the framework (59) leaves the end (E1) of said upper spars free so as to allow a consolidated integration of the trailing edge in connection with said end (E1) of the upper spars.

3. Fairing according to either one of Claims 1 and 2, in which the first end portion (E5) of the framework (59) is attached through an attachment of the rib(s)-framework-spars assembly.

4. Fairing according to one of the preceding claims, in which the framework (59) is produced by welding two half-shells (C9) in order to form a "U" profile.

5. Fairing according to one of the preceding claims, in which the framework (59) is fitted onto the lower spars (L3) by joggling the framework on these spars.

6. Fairing according to one of the preceding claims, in which the trailing edge (55) is formed by a metal sheet folded longitudinally along an edge (A5) to form two flat surfaces (56) integrated into the framework so as to be attached along the whole length of the flanks (F9) of the profile of the framework (59).

7. Fairing according to one of the preceding claims, in which the framework (59) is formed by two identical half-shells (C9) welded longitudinally together along a median line (S9).

8. Fairing according to one of the preceding claims, in which a drain is removably integrated by means of a cutout of the trailing edge (55) on the upper spars (L1) side.

9. Fairing according to one of the preceding claims, in which lateral panels (61) and a thermal protection coating (21) are respectively secured to the ribs (50) and to the lower spars (L3).
